# EUROPÄISCHE PATENTSCHRIFT

(11) **EP 2 844 590 B1**
(45) Veröffentlichungstag und Bekanntmachung des Hinweises auf die Patenterteilung: **14.09.2016**
(21) Anmeldenummer: 13719566.5
(22) Anmeldetag: 02.05.2013
(51) Int. Cl.: B65G 15/42, B65G 17/46, B65G 21/20

(54) **TRANSPORTVORRICHTUNG MIT VERBESSERTEN HAFTEIGENSCHAFTEN**
TRANSPORT DEVICE WITH IMPROVED ADHESION CHARACTERISTICS
DISPOSITIF DE TRANSPORT À CARACTÉRISTIQUES D' ADHÉSION AMÉLIORÉES

(30) Priorität: 03.05.2012 DE 102012207321
(43) Veröffentlichungstag der Anmeldung: 11.03.2015
(73) Patentinhaber: Robert Bosch GmbH, 70442 Stuttgart (DE)
(72) Erfinder: HANISCH, Markus, 70736 Fellbach (DE); BOEHM, Laura, 71069 Sindelfingen (DE)
(86) Internationale Anmeldenummer: PCT/EP2013/059119
(87) Internationale Veröffentlichungsnummer: WO 2013/164391

(56) Entgegenhaltungen:
- DE-A1-102010 042 753
- US-A1- 2008 169 003
- US-B2- 8 153 254
- US-B2- 8 192 901

## Beschreibung

### Stand der Technik

Die vorliegende Erfindung betrifft ein Transportband mit verbesserten Hafteigenschaften sowie eine Transportanordnung mit einem derartigen Transportband.

In der Technik werden Transportbänder in verschiedenen Einsatzbereichen eingesetzt. Ein Einsatzgebiet ist beispielsweise das Zuführen und Abführen von Produkten zu verschiedenartigen Maschinen, beispielsweise Verpackungs- und/oder Füllmaschinen oder dgl. Hierbei werden die Transportbänder immer an eine Geometrie und Größe der zu transportierenden Produkte angepasst. Hieraus resultiert jedoch ein häufiger Formatwechsel bei Änderungen der Form und/oder Größe von zu fördernden Produkten. Neben den hierbei auftretenden Rüstzeiten führt dies auch zu einem unerwünschten Maschinenstillstand. Ferner können sich bauraumbedingte Problematiken ergeben, so dass die notwendigen Transportbänder nicht immer in optimalen Zufuhrpositionen angeordnet werden können. Aus der DE 10 2008 053 619 A1 ist ein Formkörper bekannt, welcher eine hierarchische Struktur von ersten und zweiten Fäden aufweist. Hierdurch kann der Formkörper als Haftvorrichtung verwendet werden, welche als Klebebänder, Pflaster oder als Oberfläche von Teilen eines Roboters eingesetzt werden. Ferner zeigt die DE 10 2007 062 844 A1 eine Transportvorrichtung zum transportieren von Flaschen in Gefachen mit einer umlaufenden Kette und Mitnehmern zum Bewegen der Gefache, wobei an den Mitnehmern Haftmittel mit Gecko-Strukturen vorgesehen sind, welche durch eine Vielzahl von Mikro-Vorsprüngen an den Mitnehmern gebildet sind. Ferner ist aus der DE 102010042753 A1 eine Transportvorrichtung gemäß dem Oberbegriff des Anspruchs 1 bekannt.

### Offenbarung der Erfindung

Das erfindungsgemäße Transportband mit den Merkmalen des Anspruchs 1 weist demgegenüber den Vorteil auf, dass eine hohe Flexibilität auch bei Formatwechseln von Produkten erhaltbar ist. Ferner können erfindungsgemäß die Produkte am Transportband ohne aufwendige Zusatzkonstruktionen transportiert werden. Dies wird erfindungsgemäß dadurch erreicht, dass das Transportband eine zur Außenseite gerichtete Oberfläche mit einer Vielzahl von Mikrostrukturen aufweist. Die Mikrostrukturen umfassen vorstehende Bereiche derart, dass bei Kontakt der Oberfläche mit einem Gegenstand, wie z.B. einem zu fördernden Produkt, der Gegenstand aufgrund der auftretenden Van-der-Waals-Kräfte an der Oberfläche anhaftet. Hierdurch können beliebige Transportaufgaben durch das erfindungsgemäße Transportband, insbesondere auch ein Überkopftransport, oder ein seitlicher Transport, unabhängig von der Oberfläche des Produkts, ermöglicht werden. Ferner ist das Transportband mehrschichtig aufgebaut. Hierbei umfasst das Transportband vorzugsweise einen Tragriemen, eine äußere Schicht mit aufgebrachter Mikrostruktur und eine flexible Schicht, welche zwischen dem Tragriemen und der äußeren Schicht angeordnet ist. Hierdurch wird ein Transportband mit anpassungsfähiger Oberfläche bereitgestellt, welches sich an verschiedenste geometrische Formen von Produkten, z.B. Rechteckform, Flaschenform, Kugelform, usw., anpassen kann.

Die Unteransprüche zeigen bevorzugte Weiterbildungen der Erfindung.

Vorzugsweise ist das Transportband ein umlaufendes Transportband mit einem ersten und einem zweiten Umlenkelement, welche insbesondere als Umlenkrollen ausgebildet sind und das Transportband wenigstens um 120°, vorzugsweise um 180°, umlenken. Insbesondere bei der Umlenkung um 180° kann ein automatisches Ablösen des Produkts vom Transportband realisiert werden.

Besonders bevorzugt ist die flexible Schicht dabei eine Flüssigkeitsschicht mit einer magnetorheologischen Flüssigkeit oder die flexible Schicht ist eine gelartige Schicht, vorzugsweise mit einem magnetorheologischen Gel. Der Vorteil der magnetorheologischen Flüssigkeit bzw. des magnetorheologischen Gels liegt darin, dass aufgrund der Flexibilität die Schicht sich an jede beliebige Geometrie des zu transportierenden Gegenstands anpassen kann und diese Form dann durch Anlegen eines Magnetfelds beibehalten kann, da sich die flexible Schicht versteift. Hierdurch ist insbesondere auch ein Teilumschließen von Gegenständen mit beliebigen Geometrien möglich. Insbesondere können auch runde Gegenstände teilumschlossen werden, wodurch ein Entfall von Greifern oder Mitnehmern oder dgl. möglich ist.

Die vorstehenden Bereiche der Mikrostruktur am Transportband weisen vorzugsweise eine Länge zwischen 1 µm und 1000 µm auf. Besonders bevorzugt weisen die vorstehenden Bereiche dabei unterschiedliche Längen auf. Weiter bevorzugt sind die vorstehenden Bereiche entsprechend einer Vielzahl von Längslamellen angeordnet. Weiter bevorzugt sind die vorstehenden Bereiche an der Oberfläche als haarartige Fortsätze ausgebildet.

Gemäß einer weiteren Ausgestaltung der Erfindung wird eine Transportanordnung vorgeschlagen, welche eine erfindungsgemäße Transportvorrichtung aufweist sowie eine Übergabevorrichtung. Die Übergabevorrichtung ist eingerichtet, ein Produkt auf das erste Transportband derart zu übergeben, dass das Produkt mit einer definierten Kraft auf die Oberfläche des Transportbandes andrückbar ist. Hierdurch wird sichergestellt, dass das Produkt mit einer ausreichenden Kraft übergeben wird und sicher am Transportband anhaftet und die Vielzahl von Mikrostrukturen die jeweiligen notwendigen Van-der-Waals-Kräfte bereitstellen können.

Vorzugsweise umfasst die Transportanordnung als Übergabevorrichtung ein zweites Transportband, welches unterhalb des ersten Transportbandes und vertikal und horizontal versetzt zum ersten Transportband angeordnet ist. Hierdurch ergibt sich ein sich überschneidender Produktübergabebereich, wobei ein Vertikalabstand zwischen dem ersten und zweiten Transportband derart gewählt ist, dass ein Produkt mit einer definierten Kraft vom zweiten Transportband auf das erste Transportband übergebbar ist. Somit kann eine einfach aufgebaute und kostengünstige Übergabevorrichtung bereitgestellt werden. Weiterhin kann die Übergabekraft einfach eingestellt werden, indem beispielsweise das erste und/oder zweite Transportband mit einer anderen Spannung versehen wird.

Gemäß einer bevorzugten Alternative umfasst die Übergabevorrichtung für die Transportbandanordnung ein zweites und ein drittes Transportband. Dabei ist das zweite Transportband in Reihe zum ersten Transportband angeordnet, d.h., das zweite Transportband ist dem ersten Transportband in Reihe vorgeschaltet, und das dritte Transportband ist parallel zum ersten und zweiten Transportband angeordnet. Dabei überdeckt das dritte Transportband sowohl das erste als auch das zweite Transportband zumindest teilweise. Somit wird eine Übergabe eines Produkts derart realisiert, dass das Produkt zuerst zwischen dem zweiten und dritten Transportband eingeklemmt ist und in Transportrichtung gefördert wird und dann vom zweiten Transportband auf das erste Transportband übergeben wird, wobei das Produkt zuerst noch zwischen dem zweiten und dritten Transportband und dann dem dritten und ersten Transportband geklemmt ist. Durch das Klemmen wird eine Andrückkraft vom dritten Transportband auf das Produkt und an das erste Transportband ausgeübt und somit die notwendigen Van-der-Waals-Kräfte zwischen dem Produkt und dem ersten Transportband erzeugt. Besonders bevorzugt sind dabei das erste, zweite und dritte Transportband derart angeordnet, dass eine seitliche Produktübergabe erfolgt. Insbesondere sind die drei Transportbänder dabei im Wesentlichen vertikal, besonders bevorzugt exakt vertikal, angeordnet.

Ferner betrifft die vorliegende Erfindung die Verwendung einer mikrostrukturierten Oberfläche mit einer Vielzahl von vorstehenden Bereichen, die in einem Bereich von 1 bis 1000 µm vorstehen, an einem Transportband einer Transportvorrichtung. Somit wird erfindungsgemäß zum ersten Mal vorgeschlagen, derartige Mikrostrukturen an einem Transportband zu verwenden, wodurch sich viele überraschende Vorteile bei der Lösung von Transportaufgaben mit Transportbändern ergeben.

### Zeichnung

Nachfolgend werden bevorzugte Ausführungsbeispiele der Erfindung unter Bezugnahme auf die begleitende Zeichnung im Detail beschrieben. In der Zeichnung ist:
- Figuren 1 bis 6: schematische, perspektivische Ansichten von Transportbändern gemäß einem ersten bis sechsten Ausführungsbeispiel, und
- Figur 7: eine schematische Schnittansicht, welche ein Funktionsprinzip eines erfindungsgemäßen Transportbands mit Mikrostruktur und zusätzlich mit einer flexiblen Schicht erläutert.

### Bevorzugte Ausführungsformen der Erfindung

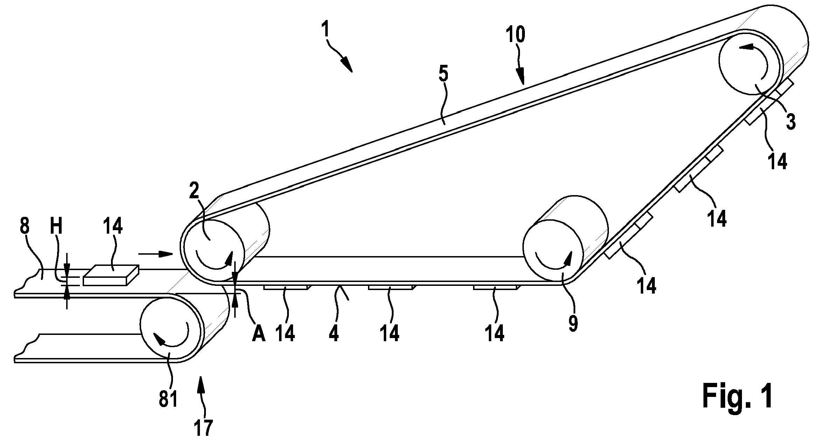

Nachfolgend wird unter Bezugnahme auf Figur 1 eine Transportvorrichtung 1 mit einem erfindungsgemäßen Transportband 10 beschrieben. Die Transportvorrichtung 1 umfasst ferner eine erste und eine zweite Umlenkrolle 2, 3 sowie eine Spannrolle 9. Das umlaufende Transportband 10 weist an einer zur Außenseite gerichteten Oberfläche eine Vielzahl von Mikrostrukturen 5 auf, welche eine Vielzahl von vorstehenden Bereichen im Mikrometerbereich (zwischen 1 und 1000 µm) aufweisen. Das Bezugszeichen 8 bezeichnet ein Zufuhrband, mit welchem Produkte 14 zur erfindungsgemäßen Transportvorrichtung 1 zugeführt werden.

Durch die Mikrostrukturen 5 auf der Oberfläche 4 des Transportbandes 10 können Gegenstände aufgrund der zwischen dem Gegenstand und den Mikrostrukturen auftretenden Van-der-Waals-Kräfte an der Oberfläche des Transportbandes 10 anhaften. Hierbei ergeben sich durch die Vielzahl von vorstehenden Bereichen (mehrere Millionen) eine ausreichende Haltekraft, obwohl jeder vorstehende Bereich nur eine winzige Haltekraft bereitstellt, aber die Summe aller winzigen Haltekräfte es ermöglicht, ein Produkt, wie in Figur 1 gezeigt, kopfüber zu transportieren.

Eine Übergabe des Produkts 14 von dem Zuführband 8 auf das Transportband 10 erfolgt dabei an einem Produktübergabebereich 17 derart, dass an der Umlenkrolle 81 ein senkrechter Abstand A zwischen der Umlenkrolle 81 und der ersten Umlenkrolle 2 minimal kleiner ist als eine Produkthöhe H, so dass eine Andrückkraft während des Durchlaufens des Produkts 14 zwischen den beiden Umlenkrollen erzeugt wird. Hierdurch haftet das Produkt 14 besonders gut an dem Transportband 10.

Somit kann erfindungsgemäß eine Förderung von Produkten 14 an einem Untertrum des Transportbandes 10 ermöglicht werden, wodurch insbesondere bei Formatumstellungen kein Wechsel des Transportbandes notwendig ist. Somit kann die erfindungsgemäße Transportvorrichtung 1 für verschiedenste Produkte 14 verwendet werden, auch wenn diese unterschiedliche Größen und/oder unterschiedliche Geometrien aufweisen. Ferner können mittels der vorliegenden Erfindung insbesondere auch Übergaben von Produkten 14 von unten nach oben ermöglicht werden. Weiterhin wird insbesondere auch die Flexibilität der Positionierung der erfindungsgemäßen Transportvorrichtung, insbesondere in Verbindung mit Abfüll- und/oder Verpackungsmaschinen deutlich vereinfacht.

In den nachfolgend beschriebenen Ausführungsbeispielen werden gleiche bzw. funktional gleiche Bauteile mit den gleichen Bezugszeichen wie im ersten Ausführungsbeispiel bezeichnet.

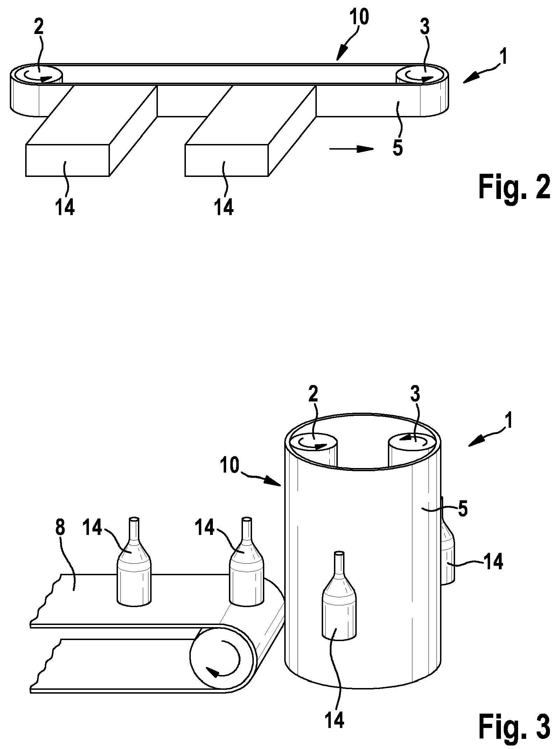

Bei dem in Figur 2 gezeigten zweiten Ausführungsbeispiel der erfindungsgemäßen Transportvorrichtung 1 ist eine Anordnung des umlaufenden Transportbandes 10 in vertikaler Richtung vorgesehen. Dadurch können Produkte 14 seitlich transportiert werden. Hierbei weist die Oberfläche des Transportbandes wieder eine Vielzahl von Mikrostrukturen 5 auf, so dass die Produkte an der Oberfläche anhaften.

Bei dem in Figur 3 gezeigten dritten Ausführungsbeispiel ist das Transportband 10 wie beim zweiten Ausführungsbeispiel in vertikaler Richtung ausgerichtet, wobei als Produkte 14 in diesem Ausführungsbeispiel Flaschen transportiert werden. Hierbei können die Flaschen in aufrechter Position sicher gefördert werden. Eine Andrückkraft ergibt sich durch die Transportgeschwindigkeit der Produkte 14 durch das Zufuhrband 8.

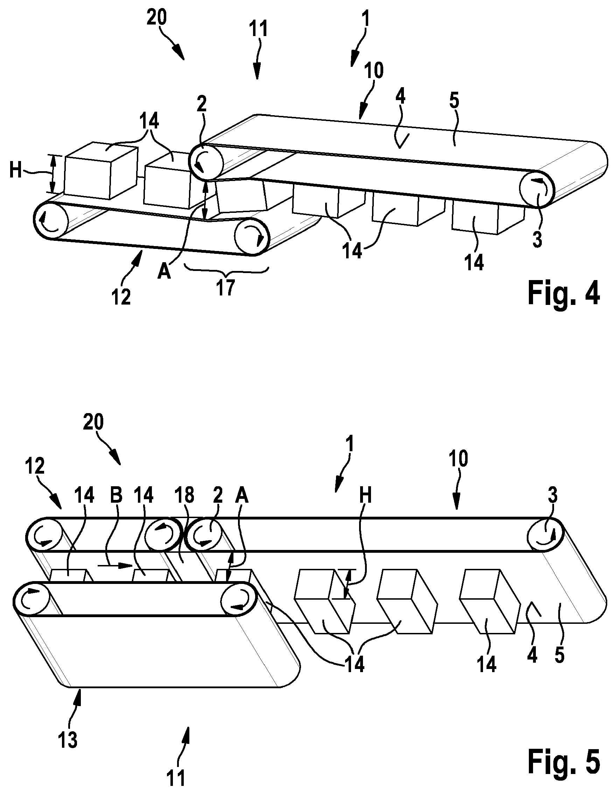

Figur 4 zeigt eine Transportvorrichtung 1 gemäß einem vierten Ausführungsbeispiel der Erfindung. Die Transportvorrichtung 1 des vierten Ausführungsbeispiels umfasst ein erfindungsgemäßes Transportband 10 sowie eine Übergabevorrichtung 11. Die Übergabevorrichtung 11 umfasst im vierten Ausführungsbeispiel ein zweites Transportband 12. Das zweite Transportband 12 ist unterhalb des ersten Transportbandes 10 angeordnet und ferner horizontal versetzt zum ersten Transportband 10. Dadurch wird ein sich überschneidender Produktübergabebereich 17 erhalten, an welchem das erste Transportband 10 und das zweite Transportband 12 übereinander angeordnet sind. Hierbei ist ein Abstand A zwischen dem ersten und zweiten Transportband kleiner als eine maximale Produkthöhe H. Hierdurch wird sichergestellt, dass, wenn das Produkt 14 in den Produktübergabebereich 17 gefördert wird, durch die zweite Transportvorrichtung 20 eine Andrückkraft auf das Produkt 14 ausgeübt wird. Hierdurch haftet das Produkt 14 besser an der mit Mikrostrukturen 5 versehenen Oberfläche 4 des ersten Transportbandes 10 an. Somit wird durch die Übergabevorrichtung 11 eine sichere Übergabe des Produktes 14 vom Obertrum des zweiten Transportbandes 12 auf das Untertrum des ersten Transportbandes 10 erreicht.

Figur 5 zeigt eine Transportvorrichtung 1 gemäß einen fünften Ausführungsbeispiel der Erfindung. Auch das fünfte Ausführungsbeispiel umfasst eine Übergabevorrichtung 11 zur Übergabe der Produkte 14 auf das erste Transportband 10. Die Übergabevorrichtung 11 umfasst ein zweites Transportband 12 und ein drittes Transportband 13. Die drei Transportbänder 10, 12, 13 sind dabei in vertikaler Richtung angeordnet, so dass eine seitliche Übergabe möglich ist. Wie aus Figur 5 ersichtlich ist, ist das zweite Transportband 12 in Reihe vor dem ersten Transportband 10 angeordnet. Das dritte Transportband 13 ist parallel zum ersten und zweiten Transportband angeordnet. Hierbei überdeckt das dritte Transportband 13 sowohl das erste als auch das zweite Transportband zumindest teilweise. Somit ergibt sich ein seitlicher Überlappungsbereich sowohl mit dem ersten Transportband 10 als auch dem zweiten Transportband 12. Die Produkte 14 werden dabei zwischen dem zweiten Transportband 12 und dem dritten Transportband 13 durch Einklemmen zwischen die beiden Transportbänder in Pfeilrichtung B transportiert. Zwischen dem zweiten Transportband 12 und dem ersten Transportband 10 ist ein Überbrückungselement 18 angeordnet, wobei die Produkte 14 mittels des dritten Transportbandes 13 über das Überbrückungselement 18 geschoben werden. Um wieder ein Andrücken der Produkte 14 mit einer definierten Kraft an das erste Transportband 10 zu erreichen, ist ein Abstand A zwischen dem dritten Transportband 13 und dem ersten Transportband 10 kleiner gewählt als eine Höhe H der Produkte 14. Hierdurch wird ein definiertes Anhaften der Produkte 14 an der Oberfläche 4 mittels der Mikrostrukturen 5 am ersten Transportband 10 erreicht. Die Transportbänder 10, 12, 13 des fünften Ausführungsbeispiels sind exakt in vertikaler Richtung ausgerichtet. Es sei jedoch angemerkt, dass die Transportbänder auch gekippt werden können, d.h., in einem beliebigen gleichen Winkel bezüglich einer horizontalen Ebene angeordnet sein können.

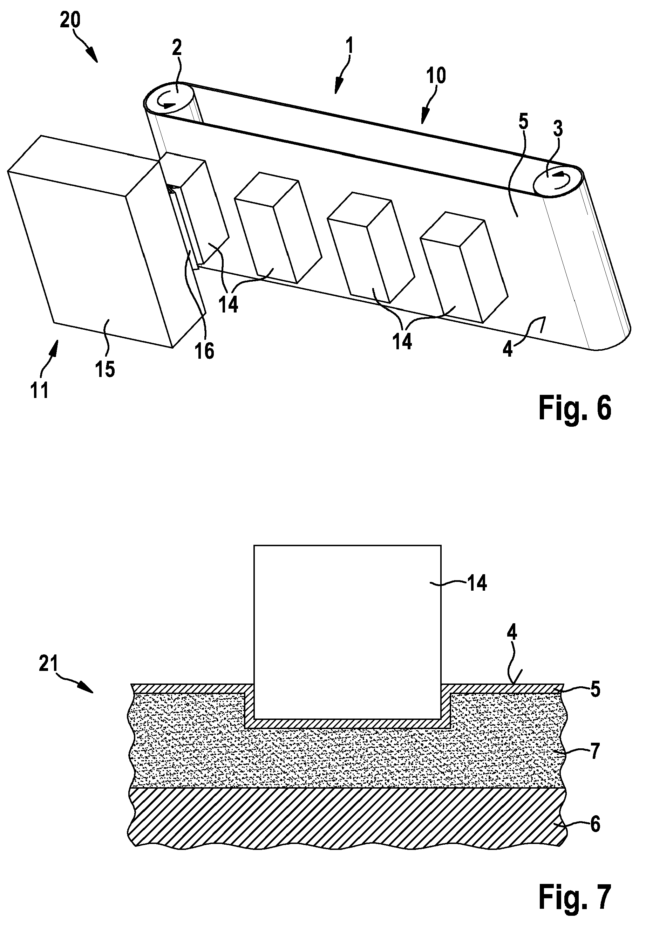

Figur 6 zeigt eine Transportvorrichtung 1 gemäß einem sechsten Ausführungsbeispiel der Erfindung. Diese Transportvorrichtung 1 umfasst ebenfalls eine Übergabevorrichtung 11, welche im sechsten Ausführungsbeispiel jedoch ein Aktuator 15 ist, welcher ein Andrückelement 16 betätigt. Hierdurch werden die Produkte 14 mittels des Andrückelements 16 gegen das vertikal angeordnete Transportband 10 mit einer definierten Kraft gedrückt. Hierdurch haften die Produkte 14 wiederum sehr gut an der Oberfläche des Transportbandes 10 an und es kann eine einfache seitliche Übergabe realisiert werden.

Figur 7 zeigt ein Transportband für eine Transportvorrichtung gemäß einem siebten Ausführungsbeispiel der Erfindung. Dieses Transportband 21 weist im Gegensatz zu den in den vorhergehenden Beispielen beschriebenen Transportbändern 10, welche lediglich eine Haftschicht an der äußeren Oberfläche 4, basierend auf dem Gecko-Prinzip, aufweisen, zusätzlich noch eine flexible Schicht 7 mit magnetorheologischen Eigenschaften auf. Die flexible Schicht 7 ist dabei zwischen der äußeren Schicht mit Mikrostrukturen 5 und einem Trageriemen 6 angeordnet. Hierdurch weist das Transportband 21 eine bessere Anpassungsfähigkeit an geometrische Formen der Produkte 14 auf, wobei, wie in Figur 7 gezeigt, ein teilweises Umschließen des Produkts 14 möglich ist. Durch Anlegen eines Magnetfeldes kann die flexible Schicht versteift werden und das Produkt 14 sicher gehalten werden. Hierdurch können insbesondere Produkte mit gerundeten oder runden Außenflächen, wie z.B. Flaschen, besser gehalten werden.

Es sei angemerkt, dass ein wie in Figur 7 gezeigtes Transportband 21 auch bei allen beschriebenen anderen vorhergehenden Ausführungsbeispielen verwendet werden kann.

## Patentansprüche

1. Transportvorrichtung, umfassend ein Transportband (10) mit einer zur Außenseite des Transportbandes gerichteten Oberfläche (4),
- wobei die Oberfläche (4) eine Vielzahl von Mikrostrukturen mit vorstehenden Bereichen aufweist derart, dass bei Kontakt der Oberfläche (4) mit einem Gegenstand (14) der Gegenstand (14) aufgrund der auftretenden Van-der-Waals-Kräfte an der Oberfläche (4) anhaftet,
**dadurch gekennzeichnet, dass**
- das Transportband (21) einen Tragriemen (6), eine äußere Schicht (4) mit einer Mikrostruktur (5) und eine flexible Schicht (7) aufweist, wobei die flexible Schicht (7) zwischen dem Tragriemen (6) und der äußeren Schicht (4) mit Mikrostruktur (5) angeordnet ist.

2. Transportvorrichtung nach Anspruch 1, **dadurch gekennzeichnet, dass** das Transportband ein umlaufendes Transportband ist mit wenigstens einem ersten Umlenkelement (2) und einem zweiten Umlenkelement (3), und insbesondere die Umlenkelemente (2, 3) Umlenkrollen sind, und die erste und/oder zweite Umlenkrolle das Transport (10) um wenigstens 120°, vorzugsweise 180°, umlenkt.

3. Transportvorrichtung nach Anspruch 1, **dadurch gekennzeichnet, dass** die flexible Schicht eine Flüssigkeitsschicht mit einer magnetorheologischen Flüssigkeit ist oder dass die flexible Schicht eine gelartige Schicht, vorzugsweise mit einem magnetorheologischen Gel, ist.

4. Transportanordnung (20), umfassend:
- eine erste Transportvorrichtung (10) nach einem der vorhergehenden Ansprüche, und
- eine Übergabevorrichtung (11), welche eingerichtet ist, einen Gegenstand (14) auf das erste Transportband (10) derart zu übergeben, derart, dass zwischen dem Gegenstand (14) und der Oberfläche des Transportbandes ein Adhäsionseffekt aktiviert wird, und der Gegenstand (14) auf der Oberfläche (4) des ersten Transportbandes (10) hält.

5. Transportanordnung nach Anspruch 5, **dadurch gekennzeichnet, dass** die Übergabevorrichtung ein zweites Transportband (12) umfasst, welches derart unterhalb des ersten Transportbandes (10) angeordnet ist, dass zwischen dem ersten und zweiten Transportband ein sich überdeckender Produktübergabebereich (17) vorhanden ist, wobei ein vertikaler Abstand (A) zwischen dem ersten Transportband (10) und dem zweiten Transportband (12) derart gewählt ist, derart, dass zwischen dem Gegenstand (14) und der Oberfläche des Transportbandes ein Adhäsionseffekt aktiviert wird, und der Gegenstand vom zweiten Transportband (12) auf das erste Transportband (10) übergebbar ist.

6. Transportanordnung nach Anspruch 5, **dadurch gekennzeichnet, dass** die Übergabevorrichtung (11) ein zweites Transportband (12) und ein drittes Transportband (13) umfasst, wobei das zweite Transportband (12) in Reihe zum ersten Transportband vor dem ersten Transportband (10) angeordnet ist und das dritte Transportband (13) parallel zum ersten und zweiten Transportband (10, 12) angeordnet ist, wobei das dritte Transportband (13) sowohl das erste Transportband (10) als auch das zweite Transportband (12) zumindest teilweise überdeckt und das erste, zweite und dritte Transportband (10, 12, 13) im Wesentlichen in vertikaler Richtung angeordnet sind, um eine seitliche Übergabe des Gegenstands (14) zu ermöglichen.

7. Transportanordnung nach Anspruch 5, **dadurch gekennzeichnet, dass** die Übergabevorrichtung (11) einen Aktuator (15) und ein Andrückelement (16) umfasst, welches vom Aktuator (15) betätigbar ist, um einen Gegenstand gegen das erste Transportband (10) zu drücken, derart, dass zwischen dem Gegenstand (14) und der Oberfläche des Transportbandes ein Adhäsionseffekt aktiviert wird.

## Claims

1. Transport device, comprising a transport belt (10) with a surface (4) directed towards the outside of the transport belt,
- the surface (4) having a multiplicity of microstructures with projecting regions, in such a way that, upon contact of the surface (4) with an object (14), the object (14) adheres to the surface (4) on account of the Van der Waals forces that occur,
**characterized in that**
- the transport belt (21) has a supporting belt (6), an outer layer (4) with a microstructure (5) and a flexible layer (7), wherein the flexible layer (7) is arranged between the supporting belt (6) and the outer layer (4) with microstructure (5).

2. Transport device according to Claim 1, **characterized in that** the transport belt is a circulating transport belt with at least a first deflection element (2) and a second deflection element (3), and in particular the deflection elements (2, 3) are deflection rollers, and the first and/or second deflection roller deflects the transport (10) through at least 120°, preferably 180°.

3. Transport device according to Claim 1, **characterized in that** the flexible layer is a liquid layer with a magnetorheological liquid, or in that the flexible layer is a gel-like layer, preferably with a magnetorheological gel.

4. Transport arrangement (20), comprising
- a first transport device (10) according to one of the preceding claims, and
- a transfer device (11), which is configured to transfer an object (14) to the first transport belt (10) in such a way that an adhesion effect between the object (14) and the surface of the transport belt is activated, and the object (14) stops on the surface (4) of the first transport belt (10).

5. Transport arrangement according to Claim 5, **characterized in that** the transfer device comprises a second transport belt (12), which is arranged underneath the first transport belt (10) in such a way that there is an overlapping product transfer region (17) between the first and second transport belt, wherein a vertical distance (A) between the first transport belt (10) and the second transport belt (12) is chosen in such a way that an adhesion effect between the object (14) and the surface of the transport belt is activated, and the object can be transferred from the second transport belt (12) to the first transport belt (10).

6. Transport arrangement according to Claim 5, **characterized in that** the transfer device (11) comprises a second transport belt (12) and a third transport belt (13), wherein the second transport belt (12) is arranged in series with the first transport belt, before the first transport belt (10), and the third transport belt (13) is arranged parallel to the first and second transport belt (10, 12), wherein the third transport belt (13) at least partly overlaps both the first transport belt (10) and also the second transport belt (12), and the first, second and third transport belt (10, 12, 13) are arranged substantially in the vertical direction in order to permit a lateral transfer of the object (14).

7. Transport arrangement according to Claim 5, **characterized in that** the transfer device (11) comprises an actuator (15) and a pressing element (16), which can be actuated by the actuator (15) in order to press an object against the first transport belt (10), in such a way that an adhesion effect between the object (14) and the surface of the transport belt is activated.

## Revendications

1. Dispositif de transport, comprenant une bande transporteuse (10) avec une surface (4) orientée vers le côté extérieur de la bande transporteuse,
- la surface (4) présentant une pluralité de microstructures avec des régions saillantes, de telle sorte que lors du contact de la surface (4) avec un objet (14), l'objet (14) adhère à la surface (4) du fait des forces de Van der Waals en présence,
**caractérisé en ce que**
- la bande transporteuse (21) présente une courroie de support (6), une couche extérieure (4) avec une microstructure (5) et une couche flexible (7), la couche flexible (7) étant disposée entre la courroie de support (6) et la couche extérieure (4) avec la microstructure (5).

2. Dispositif de transport selon la revendication 1, **caractérisé en ce que** la bande transporteuse est une bande transporteuse en circuit fermé avec au moins un premier élément de renvoi (2) et un deuxième élément de renvoi (3), et les éléments de renvoi (2, 3) étant notamment des poulies de renvoi, et la première et/ou la deuxième poulie de renvoi déviant le transport (10) d'au moins 120°, de préférence de 180°.

3. Dispositif de transport selon la revendication 1, **caractérisé en ce que** la couche flexible est une couche de liquide avec un liquide magnéto-rhéologique ou **en ce que** la couche flexible est une couche de type gel, de préférence avec un gel magnéto-rhéologique.

4. Agencement de transport (20) comprenant :
- un premier dispositif de transport (10) selon l'une quelconque des revendications précédentes, et
- un dispositif de transfert (11) qui est prévu pour transférer un objet (14) sur la première bande transporteuse (10) de telle sorte qu'entre l'objet (14) et la surface de la bande transporteuse soit activé un effet d'adhésion et l'objet (14) adhére à la surface (4) de la première bande transporteuse (10).

5. Agencement de transport selon la revendication 5, **caractérisé en ce que** le dispositif de transfert comprend une deuxième bande transporteuse (12), laquelle est disposée en dessous de la première bande transporteuse (10) de telle sorte qu'entre la première et la deuxième bande transporteuse soit prévue une région de transfert de produit se chevauchant (17), une distance verticale (A) entre la première bande transporteuse (10) et la deuxième bande transporteuse (12) étant choisie de telle sorte qu'entre l'objet (14) et la surface de la bande transporteuse soit activé un effet d'adhésion et l'objet puisse être transféré de la deuxième bande transporteuse (12) à la première bande transporteuse (10).

6. Agencement de transport selon la revendication 5, **caractérisé en ce que** le dispositif de transfert (11) comprend une deuxième bande transporteuse (12) et une troisième bande transporteuse (13), la deuxième bande transporteuse (12) étant disposée en rangée par rapport à la première bande transporteuse avant la première bande transporteuse (10) et la troisième bande transporteuse (13) étant disposée parallèlement à la première et à la deuxième bande transporteuse (10, 12), la troisième bande transporteuse (13) recouvrant à la fois la première bande transporteuse (10) et la deuxième bande transporteuse (12) au moins en partie et la première, la deuxième et la troisième bande transporteuse (10, 12, 13) étant disposées essentiellement dans la direction verticale afin de permettre un transfert latéral de l'objet (14).

7. Agencement de transport selon la revendication 5, **caractérisé en ce que** le dispositif de transfert (11) comprend un actionneur (15) et un élément de pressage (16) qui peut être actionné par l'actionneur (15) afin de presser un objet contre la première bande transporteuse (10) de telle sorte qu'entre l'objet (14) et la surface de la bande transporteuse soit activé un effet d'adhésion.
